Europäisches Patentamt

European Patent Office

Office européen des brevets

(11) Veröffentlichungsnummer: **0 270 922 B1**

# EUROPÄISCHE PATENTSCHRIFT

(45) Veröffentlichungstag der Patentschrift: **15.05.91**

(51) Int. Cl.⁵: **F02C 7/08**, F02C 3/10

(21) Anmeldenummer: **87117366.2**

(22) Anmeldetag: **25.11.87**

(54) **Gasturbinenanlage.**

(30) Priorität: **12.12.86 DE 3642506**

(43) Veröffentlichungstag der Anmeldung:
**15.06.88 Patentblatt 88/24**

(45) Bekanntmachung des Hinweises auf die
Patenterteilung:
**15.05.91 Patentblatt 91/20**

(84) Benannte Vertragsstaaten:
**DE FR GB IT SE**

(56) Entgegenhaltungen:
**DE-A- 1 476 773**
**DE-A- 2 027 221**
**DE-A- 3 132 130**
**DE-C- 2 907 810**

**WEHRTECHNIK**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Hüller, Josef
Wiesentfelserstrasse 72/V
W-8000 München 60(DE)**

EP 0 270 922 B1

## Beschreibung

Die Erfindung bezieht sich auf eine Gasturbinenanlage nach dem Oberbegriff des Patentanspruchs 1.

Eine derartige Gasturbinenanlage ist aus der DE-OS 3132 130 bekannt. Bei der bekannten Anlage soll u. a. ein um die verlängerte Achse des Gaserzeugers bzw. um die Brennkammer rotierbar angeordneter Regenerative-Wärmetauscher vorgesehen sein, dessen scheibenförmige Matrix voneinander getrennt, im fortlaufenden Wechsel von Abgas und vorzuwärmender Verdichterluft durchströmt wird. Auf diese Weise ist zwar eine vergleichsweise kompakte Gasturbinenanlage erstellbar; der jeweilige Heißgasabschnitt der Matrix liegt unmittelbar im Abgasstrom der Nutzturbine, so daß der Abgasstrom mit zunächst verhältnismäßig geringen aerodynamischen Verlusten in Richtung auf die Scheibenmatrix geführt werden kann. Der aus den extrem kleinen Strömungskanälen resultierende kleine "hydraulische Durchmesser" der Scheibenmatrix erzwingt jedoch vergleichsweise große aerodynamische Verluste, und zwar sowohl abgas- als auch luftseitig. Ferner kann bei der bekannten Anlage immer nur ein Teil der Scheibenmatrix vom Abgas durchströmt werden, so daß die zur Verfügung stehende, vom Heißgas beaufschlagte Fläche stets vergleichsweise gering zu veranschlagen ist; zu dem ergeben sich beim beschriebenen Regenerativwärmetauscher sogenannte "Heißgasschleppverluste" als Folge der kontinuierlichen Matrixbewegung um die Wärmetauscherdrehachse aus dem heißen (Abgas) in den "kalten" Teil (Verdichterluft) der Anlage.

Weitere Nachteile des beschriebenen scheibenartigen Regenerativ-Wärmetauscherkonzepts sind in dem aus dem rotierenden System begründeten Bau- und Abdichtungsaufwand und dem damit verbundenen Störanfälligkeitsgrad heraus zu sehen.

Aus der Zeitschrift "Wehrtechnik", Nr. 2, 1985, Seiten 60 und 62, ist ebenfalls schon bekannt, eine Gasturbinenanlage mit einem sogenannten "Lanzetten-Wärmetauscher" auszustatten; der im vorliegenden bekannten Fall oberhalb des Gasturbinentriebwerks angeordnete Wärmetauscher besteht aus zwei parallel übereinander angeordnete Zentralrohren, von denen die Profilrohrmatrix parallel zur Triebwerkslängsachse U-förmig in den Triebwerkabgasstrom auskragt; vor ihrem Eintritt in die Brennkammer wird im bekannten Fall die Verdichterluft in das obere Zentralrohr geleitet, strömt dann beidseitig in den oberen Teil der Matrix ab, aus dem sie nach jeweils beidseitiger Umkehrung der Strömungsrichtung in den unteren Matrixteil abströmt; aus dem unteren Matrixteil fließt die aufgeheizte Verdichterluft vom unteren Zentralrohr aus über eine Leitung in die Brennkammer ab.

Ein derartiges, grundsätzliches auch aus der DE-PS 2907 810 bekanntes Wärmetauscherkonzept zeichnet sich u. a. durch folgende Kriterien aus.

Die Anordnung und Ausbildung der mit einem linsen- oder lanzettenförmigen Querschnitt ausgestatteten Druckluftleitungen ermöglicht zum einen eine optimale aerodynamische Effektivität (Wärmetauschleistung/Reibleistung) auf der Gasseite. Unter Bereitstellung der zulässigen Heißgasversperrung kann eine Vielzahl derartiger aerodynamisch optimierter Rohrleitungen bzw.Matrixhohlprofilkörper zu einer vergleichsweise kompakten Matrix bei zugleich hoher Matrixdichte ineinander "verschachtelt" zusammengefügt werden.

Insbesondere im Wege der Matrixprofilinnengestaltung, mit mittlerem Profilquersteg und davon dreieckförmig zugespitzt gegen die Profilendkanten auslaufenden Druckluftinnenkanälen, läßt sich eine vergleichsweise große und effektive luftseitige Wärmeübertragungsfläche bereitstellen; zugleich sind die Profile der Matrix bezüglich deren Vorder-und Hinterkanten praktisch keinen Heißgasabbrandgefahren ausgesetzt. Eine derart gestaltete Profilrohrmatrix ist ferner hinsichtlich Stoß und Schwingungsbelastungen sowie hinsichtlich schwellender Beanspruchung durch hohe Lastzyklenanzahl verhältnismäßig resistent.

Vom Grundsatz her ermöglicht ein derartiger Profilrohr-Wärmetauscher bei vergleichsweise geringen Wärmetauscherabmessungen einen hohen Wärmeaustauschgrad.

In der Kombination eines derartigen bekannten Profilrohr-Wärmetauschers mit der Gasturbinenanlage gemäß "Wehrtechnik", Nr 2, 1985, Seiten 60 - 62, ergeben sich verhältnismäßig lange und häufige Strömungsumlenkungen, und damit nicht unbeträchtliche aerodynamische Verluste erzwingende Rohrleitungen vom Verdichterende zum oberen Zentralrohr bzw. vom unteren Zentralrohr zur Brennkammer; im zuletzt genannten Leitungsfall sind wiederum Temperaturverluste der aufgeheizten Verdichterluft zu erwarten, bevor sie in die Brennkammer abströmt.

Ferner ist bei der aus "Wehrtechnik" bekannten Gasturbinenanlage die Nutzturbine der Gaserzeugerturbine axial aero-thermodynamisch so nachgeschaltet, daß der nach oben abgelenkte Abgasstrom nicht homogen gegen die Gesamtmatrix des Wärmetauschers expandieren kann; mithin ergibt sich im bekannten Fall eine mit aerodynamischen Verlusten verbundene, örtliche inhomogene Heißgasmassenstromverteilung an der Matrix.

Der Erfindung liegt die Aufgabe zugrunde, eine Gasturbinenanlage mit Wärmetauscher anzugeben, die bei vergleichsweise geringen aero-thermodynamischen Prozeßverlusten sehr wirtschaftlich und kompakt ist.

Die gestellte Aufgabe ist bei einer Gasturbinenanlage nach der eingangs genannten Art durch die im Kennzeichnungsteil des Patentanspruchs 1 enthaltenen Merkmale erfindungsgemäß gelöst.

Auf diese Weise wird bei hocheffizienter Anordnung und Ausbildung eines Kreuz-Gegenstrom-Profilrohrwärmetauschers eine vergleichsweise kompakte, im wesentlichen "würfelförmige" Gasturbinenanlage geschaffen. Der Raum zwischen der Brennkammer und dem Nutzturbinen- bzw. Diffusorabgasaustritt kann für eine optimale Effektivität des genannten Profilrohrwärmetauschers ausgenützt werden.

Bei gegenüber bekannten Profilrohrwärmetauscherkonzepten etwa gleichem Matrixvolumen können extrem kurze Leitungsanschlußstücke zugrunde gelegt werden, um die vorzuwärmende Verdichterluft über den triebwerksintegralen Luftführungskanal, beidseitig entlang der Brennkammer, in das jeweils erste und zweite Zentralrohr zu leiten; die genannte Luftführung kann also aerodynamisch günstig auf äußerst kurzem Wege erfolgen. Für das dritte, die aufgeheizte Verdichterluft in die Brennkammer führende Zentralrohr wird praktisch keine zusätzliche Rohranschlußleitung benötigt, um die aufgeheizte Verdichterluft in die Brennkammer zu leiten; hierdurch ergeben sich extrem geringe Temperaturverluste der aufgeheizten Verdichterluft.

Ein weiterer wesentlicher Vorteil gegenüber Bekanntem ist es, daß die gesamte Matrix des Profilwärmetauschers vom Abgasstrom homogen angeströmt bzw. durchströmt wird; es ist also eine überwiegend gleichförmige Heißgasmassenstrom- und Geschwindigkeitsverteilung an der Matrix zu erwarten.

Vorteilhafte weitere Ausgestaltungen der Erfindung ergeben sich aus den Merkmalen der Patentansprüche 2 bis 11.

Anhand der Zeichnungen ist die Erfindung beispielsweise weiter erläutert; es zeigen:

Fig. 1 einen Axiallängsschnitt der Gasturbinenanlage und

Fig. 2 eine Schnittansicht nach der Linie A-A der Fig. 1.

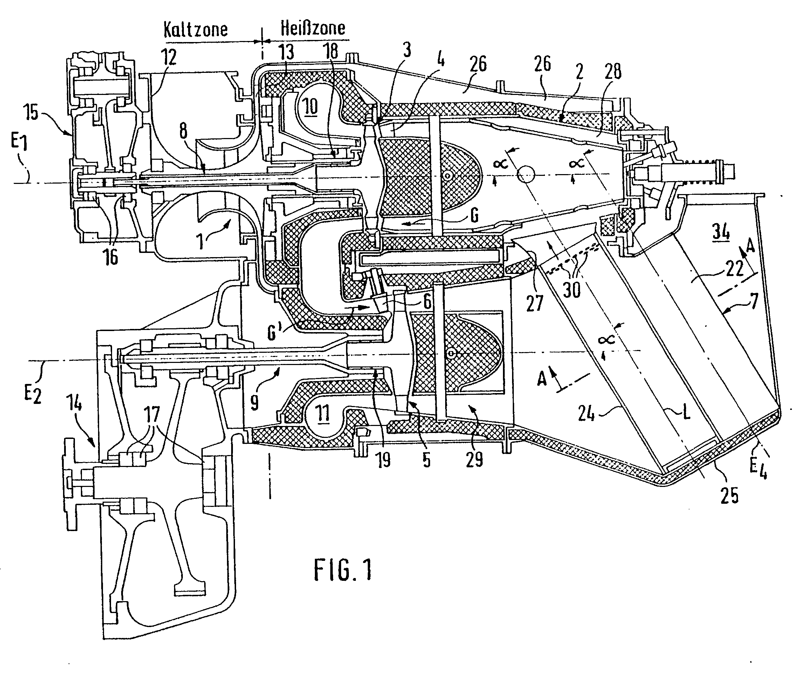

Fig. 1 zeigt den Gaserzeuger einer Gasturbinenanlage, der aus einem Verdichter 1, einer Brennkammer 2 und einer Verdichterantriebsturbine 3 besteht, deren zugehörige Leitschaufeln mit 4 bezeichnet sind. Ferner ist bei der Gasturbinenanlage nach Fig. 1 der Verdichterantriebsturbine 3 eine Nutzturbine 5 abgasseitig nachgeschaltet, deren verstellbare Vorleitschaufeln mit 6 bezeichnet sind. Darüber hinaus weist die Gasturbinenanlage nach Fig. 1 einen in Kreuz-Gegenstrom-Bauweise ausgebildeten Profilrohrwärmetauscher 7 auf, mit dem eine Vorerhitzung der Verbrennungsluft anhand eines Teiles der dem Nutzturbinenabgas entzogenen Wärme in später noch näher erläuterter Weise herbeigeführt werden soll.

Wie weiter aus Fig. 1 ersichtlich ist, sind hierbei der Wellenstrang 8 des Gaserzeugers und der Wellenstrang 9 der Nutzturbine 5 in zwei getrennten Quermittelebenen E1, E2 parallel übereinander angeordnet.

Wie ferner in Fig. 1 verdeutlicht, sind die Verdichterantriebsturbine 3 des Gaserzeugers und die Nutzleistungsturbine 5 in zwei axial geringfügig zueinander versetzten Querebenen angeordnet und ferner in einander entgegengesetzten Richtungen gasbeaufschlagt, was durch die Pfeile G, G' angezeigt sein soll.

Gemäß Fig. 1 kommunizieren die Verdichterantriebsturbine 3 und die Nutzturbine 5 über zwei hier in einer gemeinsamen Querebene befindliche Gassammelspiralen 10 und 11 von denen die eine, 10, der Verdichterturbine 3 gasaustrittsseitig nach-, die andere, 11, der Nutzturbine 5 gaseintrittsseitig vorgeschaltet ist.

Wie weiter in Fig. 1 angegeben, soll die gesamte Gasturbinenanlage einerseits in eine Heißzone und andererseits in eine Kaltzone aufgeteilt sein. Dabei sind im wesentlichen die Verdichterturbine 3 sowie die Nutzturbine 5 nebst zugehörigen Gas- bzw. Heißgasführungen einschließlich der Brennkammer 2 sowie der Profilrohrwärmetauscher 7 Bestandteile der Heißzone der Anlage, während im wesentlichen der Verdichter 1 des Gaserzeugers, dessen Lufteintrittsgehäuse 12 einschließlich eines beschaufelten Diffusors 13 sowie ferner Ab- bzw. Antriebseinrichtungen 14 bzw. 15 dann im wesentlichen die in der Kaltzone der Anlage liegenden Bauteile sein sollen.

Dem Wellenstrang 8 des Gaserzeugers und dem Wellenstrang 9 der Nutzturbine 5 sind jeweils beiden eine den Axialschub kompensierende Hauptlagerung 16 bzw. 17 (Festlager) zugeordnet, wobei diese Hauptlagerungen als ölgeschmierte Dreipunktkugellager ausgeführt sein können. Diese genannten Hauptlager 16 bzw. 17 sind als integrierte Bestandteile den Ab- und Antriebseinrichtungen 14, 15 der Kaltzone zugeordnet. Den beiden genannten Wellensträngen 8 und 9 ist ferner jeweils eine als Luftlagerung ausgebildete Loslagerung 18 und 19 in der Heißzone der Anlage zugeordnet.

Gemäß Fig. 1 ist der Verdichterturbine 3 bzw. deren Eintrittsleitgitter 4 eine vorzugsweise topfförmig ausgebildete Brennkammer 2 vorgeschaltet.

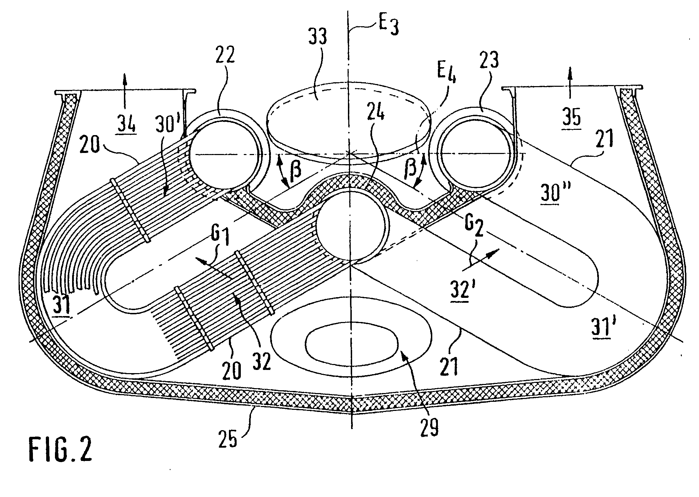

Der Profilwärmetauscher 7 weist eine in Kreuz-Gegenstrom-Bauweise durchströmte Matrix (Matrixteile 20, 21 - Fig. 2) auf, die U-förmig auskragend an voneinander getrennte Zentralrohre 22, 23, 24 angeschlossen ist; dabei soll die gesamte Profilrohrmatrix 20, 21 innerhalb eines dem Abgasaustritt der Nutzleistungsturbine 5 räumlich erweitert nachgeschalteten, sich entlang der Brennkammer 2 erstreckenden Abgassammelgehäuses 25 angeordnet sein; die Zentralrohre 22, 23, 24 des Profilwärmetauschers 7 sollen im wesentlichen parallel nebeneinander angeordnet und an jeweils einen Ende verschlossen ausgebildet sein: ferner sollen die offenen Enden des ersten und zweiten Zentralrohres 22, 23 mit einem äußeren, brennkammerseitig endenden, mittels vom Verdichter 1 geförderter Luft beaufschlagten Kanal 26 der Anlage kommunizieren.; das eine offene Ende eines dritten Zentralrohres 24 soll unmittelbar in die Brennkammer 2 geführt sein.

In nicht weiter dargestellter Weise kann das stromabwärtige Ende des Kanals 26 in ein kurzes Hosenrohr übergehen, dessen seitlich und nach unten auskragende Rohrenden an das jeweils eine offene Ende eines Zentralrohres 22 bzw. 23 angeschlossen sind.

Im Beispiel der Fig. 1 ragt ferner das dritte Zentralrohr 24 im Wege einer sich in Richtung der Luftaustrittströmung erweiternden Rohrtülle 27 in den Sekundärkanal 28 der Brennkammer 2 hinein, aus welcher die vorerhitzte Verdichterluft dem Flammrohr der Brennkammer 2 in geeigneter Weise als Verbrennungsluft zugeführt werden kann.

In Fig. 1 ist vorteilhafter Weise dem Abgasaustritt der Nutzturbine 5 ein Axialdiffusor 29 nachgeschaltet, dessen in Strömungsrichtung erweiterte Außenkanalstruktur endseitig unmittelbar in den sich zunächst erweiternden Teil des Abgassammelgehäuses 25 übergeht. Beide Matrixteile 20, 21 werden also komplett und homogen mit den Abgasströmen G1, G2 beaufschlagt (Fig. 2). Die räumlich ineinander verschachtelt angeordneten Profilrohre, z.B. 30, der Matrix (z.B. Teil 20) sollen einen lanzettenförmigen bzw. aerodynamisch günstig geformten, z.B. vom Abgasteilstrom G1, in Längsrichtung umströmten Profilquerschnitt aufweisen, in dem Sinne, daß die jeweils große Achse eines elliptischen Profils etwa in Richtung der Gasströmung angeordnet ist.

Im Betrieb der Gasturbinenanlage gelangt also zunächst die vorzuwärmende Verdichterluft vom stromabwärtigen Ende des Kanals 26 über das jeweils erste und weite Zentralrohr 22, 23 in die betreffenden oberen geradschenkeligen Matrixabschnitte 30′, 30″, von diesen aus wird die Druckluft über die bogenförmigen Umlenksektionen 31, 31′ der Matrixteile 20, 21 - unter Umkehrung der Strömungsrichtung - den betreffenden unteren geradschenkeligen Matrixabschnitten 32, 32′ zugeführt, aus denen sie - komplett erhitzt - in das mittige dritte Zentralrohr 24 abströmt, das an die Brennkammer 2 (Fig. 1) angeschlossen ist. Der rückwärtige Brennkammerdeckel ist in Fig. 2 mit 33 bezeichnet.

Wie in Fig. 1 dargestellt, ist es gemäß der Erfindung äußerst vorteilhaft, daß sämtliche Zentralrohre 22, 23, 24 unter einem jeweils gleichen Winkel α zur Quermittelebene E1 bzw. E2 des Gaserzeugers und der Nutzleistungsturbine 5 geneigt sind.

Diese Bauweise fördert u.a. die verhältnismäßig kurze, mit geringen aerodynamischen Verlusten verbundene Führung der Verdichterluft in das erste und zweite Zentralrohr 22 bzw. 23; die genannte Zentralrohrneigung begünstigt ferner die unmittelbare Führung der erhitzten Verdichterluft aus dem dritten Zentralrohr 24 in die Brennkammer. Die genannte Zentralrohrneigung ermöglicht ferner wiederum eine Anordnung der Matrixprofile 30 (Fig. 1) derart, daß die betreffenden großen Achsen der Profile im wesentlichen in der jeweiligen Abgasströmungsrichtung, z.B. G1, liegen.

Ein bevorzugter Anwendungsumfang ergibt sich gemäß der Erfindung dadurch, daß die Zentralrohre 22, 23, 24 unter einem Winkel α von etwa 45 bis 70 Grad zur Quermittelebene E1 bzw. E2 des Gaserzeugers und der Nutzturbine 5 geneigt sind.

Wie insbesondere aus Fig. 2 erkennbar, wird es zur Lösung der angegebenen Problemstellung ferner als vorteilhaft gemäß der Erfindung angesehen, daß der gegenseitige Abstand zwischen dem dritten, 24 und dem ersten oder zweiten Zentralrohr 22, 23, jeweils gleich groß, jedoch kleiner ist, als der gegenseitige Abstand des ersten und zweiten Zentralrohres 22, 23, wobei das dritte Zentralrohr 24 mit seiner Längsachse L in der gemeinsamen Komponenten Längsmittelebene E3 der Anlage angeordnet ist.

In weiterer Ausgestaltung (Fig. 2) sollen die U-förmigen Matrixteile 20, 21 "dachförmig" unter einem jeweils gleichen Winkel β in Richtung auf die verlängerte Achse der Nutzleistungsturbine geneigt angeordnet sein. Genauer ausgedrückt, können beide Matrixteile 20, 21 zusätzlich zu der durch die Zentralrohrneigung (Winkel α - Fig. 1) vorgegebenen Neigung oder Schrägstellung beidseitig um den Winkel β aus einer Schrägebene E4 abgewinkelt sein, die sowohl durch die Komponenten-Längsmittelebene E3 als auch durch die Längsachsen des ersten und zweiten Zentralrohres 22 bzw. 23 hindurchgeht. Auf diese Weise kann bei zugleich homogener Gasdurchströmung der Gesamtmatrix ein vergleichsweise kompakt gestaltbares, nicht all zu weit seitlich ausladendes Abgassammelgehäuse 25, und damit eine weiterer Beitrag zur kompakten Gesamtgestaltung der Anlage geleistet werden.

Sämtliche vorteilhaften Bau- und Funktionskriterien der zuvor beschriebenen Gasturbinenanlage mit Profilrohr-Wärmetauscher nach Fig. 1 und 2 gelten sinngemäß auch dann, wenn bei der Gasturbinenanlage der Wellenstrang der Nutzturbine im wesentlichen parallel neben dem Wellenstrang bzw. der Längsmittelachse des Gaserzeugers angeordnet wäre. In diesem Falle wären dann z.B. die parallel zueinander angeordneten Zentralrohre 22, 23, 24 jeweils unter dem Winkel α gegenüber den betreffenden Längsmittelebenen des Gaserzeugers und/oder der Nutzturbine schräg anzustellen. Die zusätzliche Neigung (Winkel β) der beiden Matrixteile 20, 21 oder -Blöcke würde dann u.a. einer Bauhöhenverringerung zugute kommen.

Wie ferner aus Fig. 1 und 2 ersichtlich ist, kann das Abgassammelgehäuse 25 stromabwärtig der U-förmigen Matrixteile 20, 21 in zwei separate Gehäusesektionen 34, 35 übergehen, die in Querrichtung zur Anlage -hier also senkrecht nach oben - abgewinkelt angeordnet sind.

Die Gehäusesektionen für eine aufgeteilte Abführung der Abgase in ein Auspuffsystem könnten aber auch z.B. so ausgebildet werden, daß die Abgasteilströme - stromab der beiden Matrixteile 20, 21 - horizontal nach hinten gerichtet sind.

## Ansprüche

1. Gasturbinenanlage mit einem aus Verdichter, Brennkammer und Verdichterantriebsturbine bestehenden Gaserzeuger, bei dem die Verdichterantriebsturbine über die an der Gaserzeugerrückseite angeordnete Brennkammer in einer dem Förderstrom des Verdichters entgegengesetzten Richtung heißgasbeaufschlagt ist, mit einem Parallelwellenstrang für eine Nutzturbine, die vom Abgasstrom der Verdichterantriebsturbine in einer gegenüber der letzteren entgegengesetzten Richtung beaufschlagt ist, und mit einem von Abgasstrom der Nutzturbine beaufschlagten Wärmetauscher, der zur Vorerhitzung der der Brennkammer zuzuführenden Verbrennungsluft ausgebildet ist, gekennzeichnet durch folgende Merkmale:
   a) Der Wärmetauscher ist als Profilwärmetauscher (7) mit in Kreuz-Gegenstrom-Bauweise durchströmter Matrix ausgebildet, die U-förmig auskragend an voneinander getrennte Zentralrohre (22, 23, 24) angeschlossen ist;
   b) die gesamte Profilrohrmatrix (7) ist innerhalb eines dem Abgasaustritt der Nutzleistungsturbine (5) räumlich erweitert nachgeschalteten, sich entlang der Brennkammer (2) erstreckenden Abgassammelgehäuses (25) angeordnet;
   c) die Zentralrohre (22, 23, 24) sind im wesentlichen parallel nebeneinander angeordnet und am jeweils einen Ende verschlossen;

   d) die offenen Enden eines ersten und zweiten Zentralrohrs (22, 23) kommunizieren mit einem äußeren, brennkammerseitig endenden, mittels vom Verdichter geförderter Luft beaufschlagten Kanal (26) der Anlage;
   e) das eine offene Ende eines dritten Zentralrohrs (24) ist unmittelbar in die Brennkammer (2) geführt.

2. Gasturbinenanlage nach Anspruch 1, dadurch gekennzeichnet, daß der Abgasaustritt der Nutzleistungsturbine (5) Bestandteil eines Abgasdiffusors (29) ist, an welchen das in Richtung auf den Profilrohrmatrixeintritt räumlich erweiterte Abgassammelgehäuse (25) angeschlossen ist.

3. Gasturbinenanlage nach Anspruch 1 oder 2, bei der der Paralellwellenstrang der Nutzleistungsturbine unterhalb oder seitlich des Gaserzeugers angeordnet ist, dadurch gekennzeichnet, daß sämtliche Zentralrohre (22, 23, 24) unter einem jeweils gleichen Winkel (α) zur betreffenden Quermittelebene (E1;E2) oder Längsmittelebene des Gaserzeugers und der Nutzleistungsturbine (5) geneigt sind.

4. Gasturbinenanlage nach Anspruch 3, bei der die Profilrohrmatrix aus U-förmigen Profilrohrbügeln besteht, deren mit gleichmäßigen gegenseitigen Abständen räumlich verschachtelt ineinandergreifende, länglich ovale Profile jeweils unter gleichen Anstellwinkeln zu den betreffenden Zentralrohrachsen angeordnet sind, dadurch gekennzeichnet, daß sämtliche Zentralrohre (22, 23, 24) unter dem gleichen Winkel (α) derart geneigt sind, daß die Profile (30) mit ihren großen Achsen im wesentlichen in der Abgasströmung liegen.

5. Gasturbinenanlage nach Anspruch 3 oder 4, dadurch gekennzeichnet, daß die Zentralrohre (22, 23, 24) unter einem Winkel (α) von 45 bis 70 Grad zur betreffenden Quermittelebene (E1; E2) oder Längsmittelebene des Gaserzeugers und der Nutzleistungsturbine (5) geneigt sind.

6. Gasturbinenanlage nach einem oder mehreren der Ansprüche 1 bis 5, dadurch gekennzeichnet, daß die Matrix (20, 21) des Profilrohrwärmetauschers (7) beidseitig bzw. nach oben und unten von den Zentralrohren (22, 23, 24) U-förmig auskragt.

7. Gasturbinenanlage nach Anspruch 6, dadurch gekennzeichnet, daß jeder U-förmige Matrixteil (20) aus parallel zueinander verlaufenden geradschenkeligen Matrixsträngen (30, 32) und einem bogenförmigen Matrixumlenkabschnitt (31) besteht.

8. Gasturbinenanlage nach einem oder mehreren der Ansprüche 1 bis 7, dadurch gekennzeichnet, daß der gegenseitige Abstand zwischen dem dritten (24) und dem ersten oder zweiten Zentralrohr (22, 23) jeweils gleich groß, jedoch kleiner ist, als der gegenseitige Abstand des ersten und zweiten Zentralrohrs (22, 23), wobei das dritte Zentralrohr (24) mit seiner Längsachse (L) in der gemeinsamen Komponenten Längsmittelebene (E3) bzw. Quermittelebene der Anlage angeordnet ist.

9. Gasturbinenanlage nach einem oder mehreren der Ansprüche 1 bis 8, dadurch gekennzeichnet, daß die U-förmigen Matrixteile (20, 21) zusätzlich dachförmig (Winkel ß) in Richtung auf die verlängerte Achse der Nutzleistungsturbine (5) geneigt angeordnet sind.

10. Gasturbinenanlage nach einem oder mehreren der Ansprüche 1 bis 9, dadurch gekennzeichnet, daß das Abgassammelgehäuse (25) stromabwärts der U-förmigen Matrixteile (20, 21) in zwei separate Gehäusesektionen (34, 35) übergeht, die in Querrichtung zur Anlage, vorzugsweise senkrecht nach oben, abgewinkelt angeordnet sind.

11. Gasturbinenanlage nach einem oder mehreren Ansprüchen 1 bis 9, dadurch gekennzeichnet, daß das Abgassammelgehäuse stromabwärts der U-förmigen Matrixteile in zwei separate Gehäusesektionen übergeht, die mit ihren Gasaustrittsöffnungen horizontal nach hinten abgewinkelt angeordnet sind.

## Claims

1. A gas turbine plant with a gas generator consisting of a compressor, a combustion chamber and a compressor drive turbine and wherein the compressor drive turbine is subject to the action of hot gases in a direction opposite to the delivery flow from the compressor and via the combustion chamber disposed at the rear of the gas generator, and with a parallel shaft line for a power turbine which is exposed to the flow of waste gases from the compressor drive turbine in a direction opposite that of the latter and with, subject to the waste gas flow from the power turbine, a heat exchanger which is constructed for preheating the combustion air which is to be fed to the combustion chamber, characterised by the following features:
   a) The heat exchanger is constructed as a profile heat exchanger (7) with a matrix in which the flow is of the cross-flow/counter-flow type and which projects U-wise, being connected to separate central ducts (22, 23, 24);
   b) the profile tube matrix (7) as a whole is disposed inside a waste gas collecting housing (25) which extends along the combustion chamber (2) and which is widened out spatially downstream of the power turbine (5);
   c) the central ducts (22, 23, 24) are disposed substantially parallel with and alongside one another and are in each case closed at one end;
   d) the open ends of a first and of a second central duct (22, 23) communicate with an outer duct (26) of the plant which ends at the combustion chamber end and which receives are delivered by the compressor;
   e) one open end of a third central duct (24) is passed directly into the combustion chamber (2).

2. A gas turbine plant according to Claim 1, characterised in that the waste gas outlet from the power turbine (5) is a constituent part of a waste gas diffuser (29) to which the waste gas collecting housing (25) which is widened out spatially towards the profile tube matrix inlet is connected.

3. A gas turbine plant according to Claim 1 or 2, in which the parallel shaft line of the power turbine is disposed beneath or at the side of the gas generator, characterised in that all central ducts (22, 23, 24) are inclined at a respective same angle ($\alpha$) to the relevant transverse median plane (E1, E2) or longitudinal central plane through the gas generator and the power turbine (5).

4. A gas turbine plant according to Claim 3, in which the profile tube matrix consists of U-shaped curved profile tubes of which the elongatedly oval profiles which inter-engage spatially at regular distances from one another are in each case disposed at identical angles in respect of the relevant central duct axes, characterised in that all central ducts (22, 23, 24) are so inclined at the same angle ($\alpha$) that the profiles (30) have their major axes disposed substantially in the waste gas flow.

5. A gas turbine plant according to Claim 3 or 4, characterised in that the central ducts (22, 23, 24) are inclined at an angle (α) of 45 to 70° to the relevant transverse median plane (E1, E2) or longitudinal median plane of the gas generator and of the power turbine (5).

6. A gas turbine plant according to one or more of Claims 1 to 5, characterised in that the matrix (20, 21) of the profile tube heat exchanger (7) projects on both sides or upwardly and downwardly from the central ducts (22, 23, 24) in the form of a U.

7. A gas turbine plant according to Claim 6, characterised in that each U-shaped matrix part (20) consists of mutually parallel like-armed matrix lines (30, 32) and a curved matrix reversal portion (31).

8. A gas turbine plant according to one or more of Claims 1 to 7, characterised in that the distances between the third (24) and the first or second central duct (22, 23) are in each case equal but smaller than the distance between the first and second central ducts (22, 23), the longitudinal axis (L) of the third central duct (24) being disposed in the longitudinal central plane (E3) or transverse central plane of the plant.

9. A gas turbine plant according to one or more of Claims 1 to 8, characterised in that the U-shaped matrix parts (20, 21) are in addition arranged in a roof shape (angle β), being inclined in the direction of the prolonged axis of the power turbine (5).

10. A gas turbine plant according to one or more of Claims 1 to 9, characterised in that downstream of the U-shaped matrix parts (20, 21), the waste gas collecting housing (25) merges into two separate housing sections (34, 35) which are disposed at an angle transversely to the plant, preferably vertically upwardly.

11. A gas turbine plant according to one or more of Claims 1 to 9, characterised in that downstream of the U-shaped matrix parts, the waste gas collecting housing merges into two separate housing sections of which the gas outlet orifices are angled horizontally rearwardly.

**Revendications**

1. Installation de turbine à gaz comprenant un générateur de gaz formé d'un compresseur d'une chambre de combustion et d'une turbine d'entraînement du compresseur, générateur dans lequel la turbine d'entraînement du compresseur reçoit les gaz chauds par l'intermédiaire de la chambre de combustion prévue du côté arrière du générateur de gaz en étant soumise à l'action des gaz chauds dans la veine de transfert du compresseur, en direction opposée, avec une ligne d'arbre parallèle pour la turbine utilitaire qui reçoit de la veine de gaz d'échappement de la turbine d'entraînement du compresseur, les gaz dans une direction opposée à celle de passage à travers la turbine, et un échangeur de chaleur recevant le flux de gaz d'échappement de la turbine utilitaire, échangeur qui est conçu pour préchauffer l'air comburant alimentant la chambre de combustion, installation caractérisée par les points suivants :

a) l'échangeur de chaleur est un échangeur de chaleur profilé (7) comprenant une matrice parcourue en contre-courants croisés, cette matrice étant en saillie en forme de U par rapport aux conduites centrales distinctes (22, 23, 24) ;

b) l'ensemble de la matrice de tubes profilés (7) est déployé dans l'espace à l'intérieur d'un carter collecteur de gaz d'échappement (25) s'étendant le long de la chambre de combustion (22), en aval de la sortie des gaz de la turbine utilitaire (5) ;

c) les conduites centrales (22, 23, 24) sont disposées les unes à côté des autres de manière pratiquement parallèle et leurs extrémités sont fermées ;

d) les extrémités ouvertes d'une première et d'une seconde conduite centrale (22, 23) communiquent avec un canal (26) de l'installation, canal recevant l'air transféré par le compresseur et se terminant du côté de la chambre de combustion ;

e) une extrémité ouverte d'une troisième conduite centrale (24) débouche directement dans la chambre de combustion (2).

2. Installation selon la revendication 1, caractérisée en ce que la sortie des gaz d'échappement de la turbine utilitaire (5) fait partie d'un diffuseur de gaz d'échappement (29) auquel est raccordé un carter collecteur de gaz d'échappement (25) élargi dans l'espace en direction de l'entrée de la matrice des tubes profilés.

3. Installation selon la revendication 1 ou 2 dans laquelle la ligne d'arbre parallèle de la turbine utilitaire se trouve en-dessous ou à côté du générateur de gaz, installation caractérisée en ce que toutes les conduites centrales (22, 23, 24) font un même angle (α) par rapport au plan médian transversal correspondant (E1, E2) ou au plan médian longitudinal du générateur de gaz et de la turbine utilitaire (5).

4. Installation selon la revendication 3, dans laquelle la matrice de tubes profilés est formée de faisceaux de tubes profilés en forme de U dont les profils ovales longitudinaux viennent prendre les uns dans les autres de manière imbriquée en étant distants régulièrement dans l'espace, les profils ayant des angles d'attaque correspondants par rapport aux axes des conduites centrales concernées, installation caractérisée en ce que toutes les conduites centrales (22, 23, 24) sont inclinées suivant le même angle (α) et les profils (30) sont situés avec leur grand axe principalement dans la direction d'écoulement des gaz d'échappement.

5. Installation selon la revendication 3 ou 4, caractérisée en ce que les conduites centrales (22, 23, 24) sont inclinées d'un angle (α) de 45 à 70 degrés par rapport au plan médian transversal (E1, E2) correspondant ou au plan médian longitudinal du générateur de gaz et de la turbine utilitaire (5).

6. Installation selon l'une ou plusieurs des revendications 1 à 5, caractérisée en ce que la matrice (20, 21) de l'échangeur de chaleur à tubes profilés (7) déborde de part et d'autre ou vers le haut ou vers le bas, en forme de U, par rapport aux conduites centrales (22, 23, 24).

7. Installation selon la revendication 6, caractérisée en ce que chaque partie de matrice (20) en forme de U se compose de branches de matrice (30, 32) droites, parallèles et d'un segment de matrice (31) recourbé en arc.

8. Installation selon l'une ou plusieurs des revendications 1 à 7, caractérisée en ce que la distance réciproque entre la troisième conduite (24) et la première ou la seconde conduite centrale (22, 23) est chaque fois égale, cette distance étant toutefois inférieure à la distance de la première et de la troisième conduite centrale (22, 23), la troisième conduite (24) ayant son axe longitudinal (L) situé dans le plan médian transversal ou le plan médian longitudinal (E3) correspondant aux composants communs.

9. Installation selon l'une ou plusieurs des revendications 1 à 8, caractérisée en ce que la partie de matrice (20, 21) en forme de U est en outre inclinée en forme de dièdre (angle β) dans la direction du prolongement de l'axe de la turbine utilitaire (5).

10. Installation selon l'une ou plusieurs des revendications 1 à 9, caractérisée en ce que le carter collecteur de gaz d'échappement (25) passe en aval des parties de matrice (20, 21) en forme de U, chaque fois en deux sections de carter, distinctes (34, 35) qui sont recourbées dans la direction transversale de l'installation de préférence perpendiculairement vers le haut.

11. Installation selon l'une ou plusieurs des revendications 1 à 9, caractérisée en ce que le carter collecteur de gaz d'échappement se divise en aval des parties de matrice en forme de U, en deux sections de carter, distinctes qui sont recourbées vers l'arrière, horizontalement par leur orifice de sortie de gaz.

FIG.1

FIG.2

EP 0 270 922 B1